# EUROPÄISCHE PATENTSCHRIFT

(11) **EP 2 743 005 B1**
(45) Veröffentlichungstag und Bekanntmachung des Hinweises auf die Patenterteilung: **20.02.2019**
(21) Anmeldenummer: 13195490.1
(22) Anmeldetag: 03.12.2013
(51) Int. Cl.: B05B 12/24, B05B 12/28, B05D 5/06, B60R 13/04

(54) **Verfahren zum Lackieren einer zumindest zweifarbigen, stufenfreien Karosserieleiste, sowie Maskierschablone**
Method for step free painting a bicoloured bodywork trim and masking device
Procédé pour peindre une baguette de carrosserie bicolore avec transition continue ainsi que gabarit de marouflage

(30) Priorität: 17.12.2012 DE 102012223440
(43) Veröffentlichungstag der Anmeldung: 18.06.2014
(73) Patentinhaber: Samvardhana Motherson Innovative Autosystems B.V. & Co. KG, 63486 Bruchköbel (DE)
(72) Erfinder: Trier, Martin, 96247 Michelau (DE)
(74) Vertreter: Isarpatent

(56) Entgegenhaltungen:
- EP-A2- 1 905 651
- DE-A1- 4 319 519
- DE-T2- 69 925 465
- DE-U1- 20 122 252
- DE-U1-202008 000 573
- FR-A1- 2 751 567
- GB-A- 2 399 040
- US-A- 5 128 176
- US-A- 5 786 028
- US-A1- 2011 014 461

## Beschreibung

### GEBIET DER ERFINDUNG

Die vorliegende Erfindung betrifft ein Verfahren zum Lackieren einer zumindest zweifarbigen, stufenfreien und nutfreien Karosserieleiste sowie eine Maskierschablone.

### TECHNISCHER HINTERGRUND

Lackierte Karosserieleisten werden bei Fahrzeugen aller Art, insbesondere bei Automobilen eingesetzt. Meist sind solche Karosserieleisten von außen sichtbar an einer Karosserie angebracht. Sie dienen dabei oftmals zum Abdecken eines Spalts oder eines Verbindungsabschnitts. Solche Karosserieleisten werden häufig aus designtechnischen Gründen eingesetzt, um beispielsweise die Optik des Fahrzeugs zu verbessern. Karosserieleisten können zudem auch wichtige Funktionen im Bereich des Wassermanagements und/oder der Aerodynamik eines Fahrzeugs haben.

Eine besonders gängige Form einer solchen Karosserieleiste ist eine Dachzierleiste. Dachzierleisten dienen dem Zweck, eine Fuge zwischen einem Dachblech und einem Seitenwandblech einer Karosserie eines Kraftfahrzeugs abzudecken und/oder abzudichten. Dabei ist die optische Erscheinung der Dachleiste in der Regel sehr wichtig.

Bei modernen Kraftfahrzeugen werden insbesondere aus designtechnischen Gründen zunehmend mehrfarbige Karosserieleisten verwendet. Oftmals ist aus designtechnischen Gründen insbesondere das Dach eines Fahrzeugs andersfarbig lackiert. Im Falle der Dachzierleisten ist dies problematisch, sofern diese sich als einstückiges Teil bis in den Bereich der A-Säule oder der C-Säule des Fahrzeugs erstrecken, welche nicht mehr die Farbe des Dachs, sondern beispielsweise die Wagenfarbe der übrigen Karosserie aufweist. Dadurch ergibt sich der Bedarf, z.B. als Dachzierleiste ausgebildete Karosserieleisten zweifarbig zu lackieren. Bei der Lackierung werden typischerweise zwei voneinander getrennte Lackierschritte verwendet.

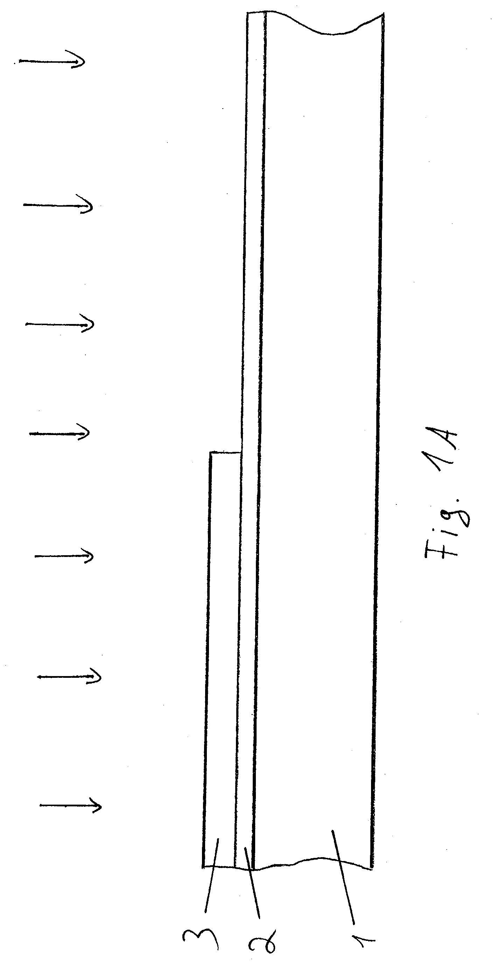

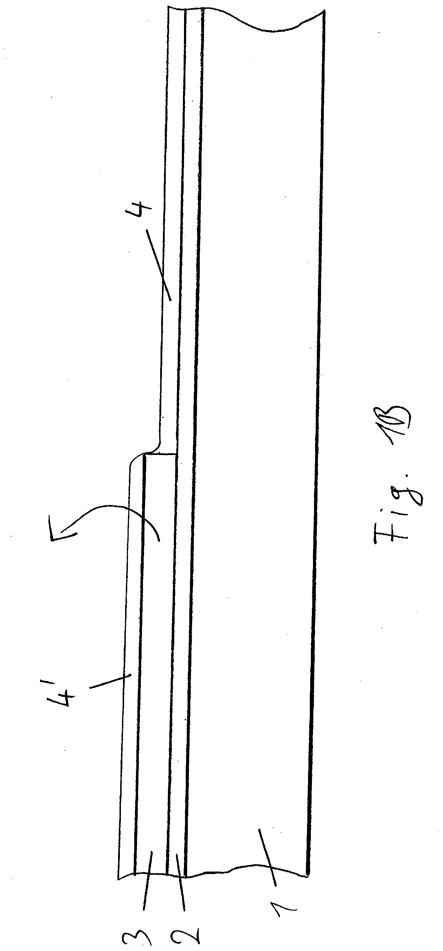

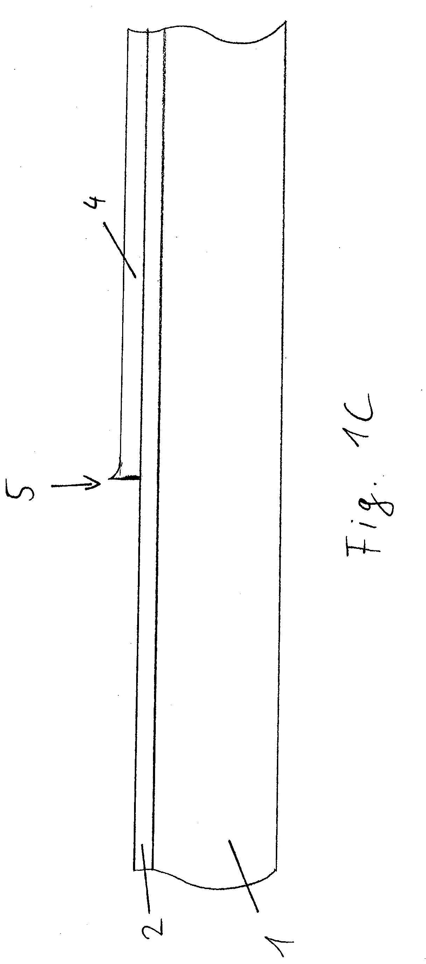

Bei einem der Anmelderin bekannten Verfahren, welches nachfolgend anhand der Figuren 1A bis 1C erläutert werden soll, wird eine Dachzierleiste 1 großflächig mit einer ersten Farbe 2, beispielsweise der Farbe 2 eines Wagendachs lackiert und anschließend eine Maskierung 3 aufgebracht. Diese Maskierung 3 ist z.B. als Klebeband oder Folie vorgesehen (Fig. 1A). Anschließend wird, wie in Fig. 1B dargestellt, auf die erste Lackfarbe 2 und die Maskierung 3 eine weitere Farbe 4 lackiert, welche beispielsweise der Wagenfarbe der übrigen Karosserie entspricht. Danach liegt die weitere Farbe als Schicht 4 auf der ersten Farbe und als Schicht 4' auf der Maskierung vor. Anschließend wird die Maskierung 3 von der ersten Farbschicht 2 abgezogen, sodass, wie in Figur 1C dargestellt, eine Lackkante 5 am Farbübergang stehen bleibt.

Problematisch ist nun, dass zwischen den beiden unterschiedlich farbigen Lackbereichen entweder eine Stufe bzw. Lackkante oder etwa auch ein Spalt vorhanden ist. Meist sind zur Beseitigung der Stufe bzw. Lackkante aufwändige Nachbearbeitungsschritte notwendig, um diese Lackkante zu glätten. Daher gilt es, diese Stufe bzw. den Spalt zu vermeiden.

Die US 5 786 028 A beschreibt ein Abdeckband, das beim Aufsprühen oder Entfernen von Beschichtungen entlang einer Demarkationslinie verwendet wird und eine vorstehende Kante aufweist.

### ZUSAMMENFASSUNG DER ERFINDUNG

Vor diesem Hintergrund liegt der vorliegenden Erfindung die Aufgabe zugrunde, ein verbessertes Verfahren zum Lackieren einer Karosserieleiste anzugeben.

Erfindungsgemäß wird diese Aufgabe durch ein Verfahren mit den Merkmalen des Patentanspruchs 1 und/oder durch eine Maskierschablone mit den Merkmalen des Patentanspruches 6 gelöst.

Die der vorliegenden Erfindung zugrunde liegende Idee besteht darin, eine Maskierschablone mit einer Lackauslaufnut zu versehen. Die Erkenntnis dieser Lösung besteht darin, dass mittels dieser Maskierschablone beim Lackieren eine gegenüber der restlichen Lackschicht reduzierte Menge an Lack in die Lackauslaufnut gelangen kann. Die Lackauslaufnut ist dazu an der auf der zu lackierenden Karosserieleiste aufliegenden Unterseite der Maskierschablone vorgesehen und zu der nicht von der Maskierschablone abgedeckten Seite der zu lackierenden Karosserieleiste hin offen. Der sich direkt an der Lackauslaufnut befindende Abschnitt der Karosserieleiste ist somit nach oben hin und zur mittels der Maskierschablone abgedeckten Seite bzw. zum Nutgrund der Lackauslaufnut hin abgeschirmt. Dieser Abschnitt kann somit lediglich von der nicht abgedeckten Seite her mit Lack beaufschlagt werden. Der Lackiervorgang wird derart durchgeführt, dass sich der Lack innerhalb der Lackauslaufnut mit einer zum Nutgrund der Lackauslaufnut hin stetig vermindernden Dicke auf dem zu lackierenden Teil bzw. der zu lackierenden Karosserieleiste absetzt. Somit wird ein weitestgehend kontinuierlich abnehmender und damit stufenfreier Übergang der auslaufenden Lackschicht erreicht.

Vorteilhafte Ausgestaltungen und Weiterbildungen ergeben sich aus den weiteren Unteransprüchen sowie aus der Beschreibung unter Bezugnahme auf die Figuren der Zeichnung.

Bei einer bevorzugten Ausführungsform des erfindungsgemäßen Verfahrens erfolgt das Lackieren derart und/oder solange, dass die Lackschicht im Bereich der vorgegebenen Abschnitte mit einer vorbestimmten Dicke erzeugt wird, wobei die vorbestimmte Dicke im Bereich der Lackauslaufnut stetig geringer werdend ausläuft. Die vorbestimmte Dicke stellt dabei eine Solldicke der Lackschicht dar. Beispielsweise kann die vorbestimmte Dicke 30 µm bis 40 µm betragen. Je nach Art des verwendeten Lacks können diese Werte auch deutlich größer oder kleiner ausfallen, angepasst an die Eigenschaften des verwendeten Lacks, wie beispielsweise dessen Deckung, Viskosität und dergleichen, und angepasst an einen optimierten Lackverbrauch. Somit wird eine Schicht mit einer optimalen Dicke des verwendeten Lacks auf die Karosserieleiste aufgetragen.

Bei einer weiteren bevorzugten Ausführungsform erfolgt das Lackieren derart und/oder solange, dass die auslaufende Lackschicht im Bereich der Lackauslaufnut vor einem Nutgrund der Lackauslaufnut endet. Als Nutgrund ist der Abschnitt der Lackauslaufnut zu verstehen, welcher die Lackauslaufnut zu dem durch die Maskierschablone abgedeckten Abschnitt der Karosserieleiste hin abschließt. Damit wird das Entstehen einer Lackkante wirksam verhindert, weil der Lack in dem Übergangsbereich, in dem die Lackschicht ausläuft, auf kein Hindernis trifft.

Bei einer vorteilhaften Ausführungsform ist die vorbestimmte Dicke der Lackschicht geringer als die Höhe der Lackauslaufnut. Somit wird gewährleistet, dass die Lackschicht am nicht abgedeckten Abschnitt der Karosserieleiste beim Lackieren nicht an die Maskierschablone stößt. Bei einer weiteren Ausführungsform ist die vorbestimmte Dicke der Lackschicht geringer als die Breite der Lackauslaufnut. Somit ist ein Übergangsbereich mit einem sanften Verlauf realisierbar, weil in der Lackauslaufnut genug Platz für den Übergangsbereich vorgesehen ist. Als Höhe der Lackauslaufnut ist der Abstand zwischen der Sichtfläche, auf welcher die Maskierschablone aufliegt, und der senkrecht zu der Sichtfläche am weitesten beabstandeten Kante der Lackauslaufnut zu verstehen. Als Breite der Lackauslaufnut ist der Abstand zwischen der Abschlusskante der Maskierschablone, an welcher die Lackauslaufnut vorgesehen ist, und des Nutgrunds zu verstehen.

Bei einer weiteren vorteilhaften Ausführungsform erfolgt das Positionieren der Maskierschablone auf dem Leistenprofil unter Verwendung von Fixiermitteln. Somit kann die Maskierschablone rutschsicher an einer definierten Stelle vorgesehen werden, was die Prozessgenauigkeit, -sicherheit und -qualität erhöht. Bevorzugt wird die Maskierschablone mittels einer Gegenschnalle, welche eine Rückseite des Leistenprofils umklammert und mit der Maskierschablone verrastet ist, rutschfest an dem Leistenprofil angebracht. Somit wird ein an die Geometrie der Karosserieleiste angepasst geformtes Fixiermittel eingesetzt. Alternativ oder zusätzlich kann die Maskierschablone auch mit einer Rast- oder Klemmverbindung an dem Leistenprofil befestigt werden. Beispielsweise kann die Maskierschablone als an dem Leistenprofil anklippbare oder anklemmbare Klemme ausgebildet sein. Ferner kann die Maskierschablone auch direkt auf dem sogenannten Lackier-Skid, einem Halterungsgestell für Lackierprozesse, gehaltert und so an dem Leistenprofil angebracht werden.

Bei bevorzugten Ausführungsformen wird das Lackieren mittels eines Sprüh- und/oder Spritzlackierverfahrens durchgeführt. Diese Verfahren werden dabei derart ausgelegt, dass Lacknebel in die Lackauslaufnut hineingelangt, aber nicht bis an den Nutgrund der Lackauslaufnut gelangt. Insbesondere werden dazu beispielweise die Prozessparameter der Viskosität des Lacks, der aufzutragenden Schichtdicke des Lacks (welche unter anderem von dessen Deckung abhängt), der Abstand der Sprüh- bzw. Spritzdüse zur Karosserieleiste, der Sprühwinkel, der Sprüh- bzw. Spritzdruck, die Art der verwendeten Sprüh- bzw. Spritzdüse und auch alle weiteren Prozessparameter, wie beispielsweise eine optionale elektrostatische Aufladung des Lacks und/oder der Karosserieleiste, aufeinander abgestimmt. Der Vorteil eines Sprüh- und/oder Spritzlackierverfahrens besteht darin, dass mit dem feinen Lacknebel ein besonders harmonischer Übergang der auslaufenden Lackschicht erzeugbar ist. Bevorzugt setzt sich dabei der in die Lackauslaufnut vordringende Lacknebel innerhalb der Lackauslaufnut zum Nutgrund hin mit stetig abnehmender Schichtdicke auf dem Leistenprofil ab.

In bevorzugten Ausführungsformen weist das Leistenprofil vor dem Aufbringen der Lackschicht einen schwarzen Grundton auf. Bevorzugt ist das Material des Leistenprofils selbst schwarz, insbesondere ein schwarzer Kunststoff. Nicht lackierte Abschnitte des Leistenprofils bleiben somit schwarz. Beispielsweise können schwarz bleibende Abschnitte dann im Bereich von Fenstern eines Kraftfahrzeugs oder an einem schwarzen Wagendach vorgesehen werden.

Alternativ oder zusätzlich stellt die Lackschicht bei weiteren Ausführungsformen eine zweite Lackschicht dar und unterhalb dieser zweiten Lackschicht wird vor dem Lackieren der zweiten Lackschicht großflächig eine erste Lackschicht auf der Sichtfläche vorgesehen. Somit können beide Lackschichten mit frei gewählten Farben vorgesehen werden.

Bei besonders bevorzugten Ausführungsformen wird als letzter Schritt des Lackierens ein zumindest teiltransparenter Schutzlack großflächig auf die gesamte Sichtfläche der Karosserieleiste aufgetragen. Der Schutzlack erstreckt sich dabei über die erste und zweite Lackschicht und den Übergang zwischen den Lackschichten bzw. über nicht lackierte, schwarze Abschnitte, den Übergang und die Lackschicht. Insbesondere hat ein Schutzlack im flüssigen Zustand eine gewisse Oberflächenspannung, womit eine damit bedeckte Oberfläche insgesamt geglättet und Übergänge zusätzlich harmonisiert werden. Des Weiteren verleiht der Schutzlack der Sichtfläche eine erhöhte Widerstandsfähigkeit gegen Umwelteinflüsse. Der Schutzlack kann über lackierte und nicht lackierte bzw. schwarz gebliebene Abschnitte gemeinsam in einem Arbeitsschritt aufgebracht werden. Ferner kann er auch über unterschiedlich lackierte Abschnitte auf diese Weise aufgebracht werden Somit wird insgesamt die äußere Erscheinung der Karosserieleiste nachhaltig verbessert.

Bei einer vorteilhaften Ausführungsform einer erfindungsgemäßen Maskierschablone ist die Abschlusskante, an der die Lackauslaufnut vorgesehen ist, zu einem nicht abgedeckten Abschnitt der zu lackierenden Karosserieleiste orientiert. Somit kann beispielsweise die zweite Lackschicht auf den nicht abgedeckten Abschnitt aufgetragen werden und im Bereich der Lackauslaufnut ein Übergangsbereich, in welchem die zweite Lackschicht ausläuft, hergestellt werden.

Bei vorteilhaften Ausführungsformen der Maskierschablone ist die Lackauslaufnut derart ausgelegt, dass ihre Höhe und/oder Breite größer ist als eine Dicke einer unter Verwendung der Maskierschablone auf die Karosserieleiste aufzubringenden Lackschicht. Somit kann gewährleistet werden, dass die Lackschicht beim Lackieren nicht an die Maskierschablone stößt. Ferner ist ein Übergangsbereich mit einem sanften Verlauf realisierbar, weil in der Lackauslaufnut genug Platz für den Übergangsbereich vorgesehen ist. Höhe und Breite der Lackauslaufnut sind dabei wie vorstehend in Bezug auf das Verfahren beschrieben definiert

Erfindungsgemäß ist die Lackauslaufnut mit einer an der Abschlusskante des Grundkörpers vorgesehenen Dichteinrichtung gebildet, wobei die Dichteinrichtung einen zu dem nicht abgedeckten Abschnitt der zu lackierenden Karosserieleiste gewandten Maskierungsrand aufweist. Die Dichteinrichtung stellt sicher, dass kein Lack bzw. Lacknebel zu dem abgedeckten Abschnitt der Karosserieleiste vordringen kann. Der Maskierungsrand stellt den Rand der Maskierschablone dar. Das heißt, dass der Lack bis zum Maskierungsrand ungehindert auf die Karosserieleiste aufgetragen werden kann. An dem Maskierungsrand beginnt die Lackauslaufnut. Somit beginnt an dem Maskierungsrand auch der Übergangsbereich, der beim Lackieren entsteht. Der abgedeckte Abschnitt der Karosserieleiste wird von dem Nutgrund der Lackauslaufnut an vollständig abgedeckt bzw. gegenüber dem Lack abgedichtet.

Ferner weist die Dichteinrichtung eine Dichtlippe auf, die derart ausgebildet und angeordnet ist, dass sie zur Sichtfläche der zu lackierenden Karosserieleiste derart vorsteht, dass sie auf dem zu lackierenden Teil aufliegt und den abgedeckten Abschnitt von dem nicht abgedeckten Abschnitt abtrennt, wobei die Dichtlippe entlang des Maskierungsrandes verläuft und zum abgedeckten Abschnitt hin um einen vorbestimmten Abstand von dem Maskierungsrand versetzt angeordnet ist. Dabei bildet die Dichtlippe gleichzeitig den Nutgrund. Die Maskierschablone liegt dabei nicht flächig auf der Karosserieleiste auf, sondern entlang einer definierten, von der Dichtlippe bestimmten Linie. Dies hat den Vorteil, dass eine verbesserte Abdichtung entlang der definierten Linie gewährleistet werden kann, indem die Dichtlippe leicht an die Karosserieleiste angedrückt wird.

Bei einer bevorzugten Ausführungsform sind die Dichteinrichtung und/oder die Dichtlippe elastisch ausgebildet. Damit können sich die Dichteinrichtung und/oder die Dichtlippe an etwaige Formabweichungen der Karosserieleiste anpassen. Somit wird eine verbesserte Dichtwirkung erzielt, sodass das Vordringen von Lack zu dem abgedeckten Abschnitt wirksam verhindert wird.

Bei weiteren Ausführungsformen betragen ein Vorstand der Dichtlippe und/oder der vorbestimmte Abstand der Dichtlippe von dem Maskierungsrand zwischen 0,1 mm und 1,0 mm. Vorteilhaft betragen diese Werte zwischen 0,25 mm und 0,75 mm. Bei bevorzugten Ausführungsformen betragen diese zwischen 0,4 mm und 0,6 mm. Mit diesen Dimensionierungen wird eine auf das verwendete Lackierverfahren ideal abgestimmte Lackauslaufnut bereitgestellt, mit welcher ein harmonischer, stufenfreier und nutfreier Übergangsbereich zwischen der ersten und zweiten Lackschicht bzw. zwischen dem Leistenprofil und der Lackschicht hergestellt werden kann. Die Dimensionierung und/oder Anordnung der Dichtlippe stellt insbesondere auch einen Prozessparameter des erfindungsgemäßen Verfahrens dar.

Bei bevorzugten Ausführungsformen sind Fixiermittel vorgesehen, die zum gleichmäßigen Andrücken der Dichtlippe auf der Sichtfläche der zu lackierenden Karosserieleiste ausgebildet sind. Damit kann eine verbesserte Dichtwirkung der Dichtlippe gewährleistet werden. Bei bevorzugten Ausführungsformen umfassen die Fixiermittel zumindest eine Gegenschnalle, welche zum Umklammern einer Rückseite des Leistenprofils ausgebildet ist und mit dem Grundkörper der Maskierschablone verrastbar ausgebildet ist. Alternativ oder zusätzlich kann die Maskierschablone auch mit einer Rast- oder Klemmverbindung an dem Leistenprofil oder auf dem Lackier-Skid gehaltert werden.

Bei einer bevorzugten Ausführungsform einer erfindungsgemäßen Karosserieleiste ist zwischen dem Leistenprofil und der Lackschicht ein stufenfreier und nutfreier Übergangsbereich mit einer vorbestimmten Breite vorgesehen, wobei die Lackschicht zumindest in dem Übergangsbereich auf das Leistenprofil aufgetragen ist und sich die Dicke der Lackschicht entlang der vorbestimmten Breite stufenfrei stetig verringert. Somit ist keine Lackkante zwischen dem Leistenprofil und der Lackschicht vorhanden. Damit wird einerseits die optische und haptische Anmutung verbessert und auch Nachbearbeitungsschritte zum Entfernen einer Lackkante vermieden.

Bei einer Ausführungsform sind über die zu lackierende Sichtfläche der Karosserieleiste zumindest zwei Übergangsbereiche vorgesehen. Somit kann ein doppelter Farbwechsel auf der Karosserieleiste bereitgestellt werden. Beispielsweise kann somit eine als Dachzierleiste vorgesehene Karosserieleiste realisiert werden, die dazu vorgesehen ist, sich von der in Wagenfarbe vorgesehenen A-Säule eines Automobils über ein schwarzes Dach bis auf die wieder in Wagenfarbe vorgesehene C-Säule zu erstrecken. Die Abschnitte der Karosserieleiste, welche für die A- und C-Säule vorgesehen sind, können beispielsweise mit der Lackschicht versehen sein. Der Abschnitt, der für das Dach vorgesehen ist kann im schwarzen Grundton des Kunststoffmaterials der Karosserieleiste verbleiben.

In einigen Ausführungsformen der Karosserieleiste liegt an nicht lackierten Abschnitten ein schwarzer Grundton des Leistenprofils an der Sichtfläche (20) vor und/oder die Lackschicht stellt eine zweite Lackschicht dar, unterhalb welcher auf der Sichtfläche großflächig eine erste Lackschicht vorgesehen ist. In diesem Fall können alternativ oder zusätzlich zu schwarz gebliebenen Abschnitten andersfarbige Abschnitte vorgesehen sein. Es kann beispielsweise auch ein zweiter Übergangsbereich an der ersten Lackschicht vorgesehen sein, in welchem die erste Lackschicht unterhalb der zweiten Lackschicht ausläuft, insbesondere mit stetig abnehmender Dicke. Somit entsteht ein Abschnitt, an welchem nur die zweite Lackschicht und keine erste Lackschicht mehr an der Sichtfläche vorliegt. Dies ist insbesondere dann vorteilhaft, wenn nach dem zweiten Übergangsbereich kein Farbwechsel mehr zur ersten Lackschicht stattfindet. Somit kann Lack und Lackierkapazität eingespart werden, welche notwendig gewesen wären, um die erste Lackschicht fortzusetzen. An einem zweiten Übergangsbereich kann somit entweder die zweite Lackschicht oder die erste Lackschicht auslaufen. Selbstverständlich können mit diesem Schichtaufbau auch mehrere Farbwechsel, insbesondere auch mit mehr als zwei verschiedenen Farben realisiert werden oder auch Farbwechsel zwischen mehreren Farben und dem schwarzen Grundton der Karosserieleiste. Als schwarzer Grundton ist stets ein im Wesentlichen schwarzer Farbton zu verstehen, der auch alle Arten von dunklen Graustufen oder dunklen bzw. sehr dunklen Farbstufen umfasst.

Besonders bevorzugt ist eine Karosserieleiste mit einem erfindungsgemäßen Verfahren und/oder unter Verwendung einer erfindungsgemäßen Maskierschablone herstellbar.

Die beschriebenen Merkmale der erfindungsgemäßen Maskierschablone und/oder einer damit hergestellten Karosserieleiste sind, für den Fachmann direkt ersichtlich, generell auch auf das erfindungsgemäße Verfahren anwendbar und umgekehrt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A-1C: Darstellung eines der Anmelderin bekannten Verfahrens zum zweifarbigen Lackieren einer Karosserieleiste;
- Fig. 2A-2D: schematische Längsschnittdarstellungen der einzelnen Verfahrensschritte eines beispielhaften Verfahrens zum Lackieren einer zumindest zweifarbigen, stufenfreien und nutfreien Karosserieleiste;
- Fig. 3: Querschnitt-Darstellung einer an einem Leistenprofil mittels einer Gegenschnalle rutschfest angebrachten Maskierschablone;
- Fig. 4: eine Ausführungsform einer mit einem erfindungsgemäßen Verfahren hergestellten Karosserieleiste;
- Fig. 5: eine Maskierschablone in einer beispielhaften Ausführungsform, dargestellt auf einer zumindest zweifarbig lackierte Karosserieleiste;
- Fig. 6: eine Maskierschablone in einer erfindungsgemäßen Ausführungsform, dargestellt auf einer zumindest zweifarbig lackierten Karosserieleiste;
- Fig. 7: eine schematische Längsschnittansicht einer zweifarbig lackierte Karosserieleiste mit zwei Farbübergängen;
- Fig. 8: eine schematische Längsschnittansicht einer zumindest zweifarbig lackierte Karosserieleiste mit einer auslaufenden ersten Lackschicht und einer auslaufenden zweiten Lackschicht
- Fig. 9: eine zweifarbig lackierte Karosserieleiste ohne eine erste Lackschicht, an der das erfindungsgemäße Lackierverfahren erfolgt;
- Fig. 10: eine schematische Längsschnittansicht einer abschnittsweise lackierte Karosserieleiste mit einem Übergangsbereich zwischen der Oberfläche des Leistenprofils und der Lackschicht;
- Fig. 11: die abschnittsweise lackierte Karosserieleiste aus Fig. 10 mit einer transparenten Schutzlackschicht;
- Fig. 12: eine schematische Längsschnittansicht einer Karosserieleiste mit einer direkt darauf aufgetragenen Lackschicht, die an zwei Übergangsbereichen ausläuft;
- Fig. 13: eine schematische Längsschnittansicht einer Karosserieleiste mit drei Übergangsbereichen.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

Die Figuren 1A bis 1C beschreiben ein der Anmelderin bekanntes Verfahren zum zweifarbigen Lackieren einer Karosserieleiste und dienen zum Beschreiben der der Erfindung zugrunde liegenden Problematik, was in der Beschreibungseinleitung bereits ausführlich behandelt wurde.

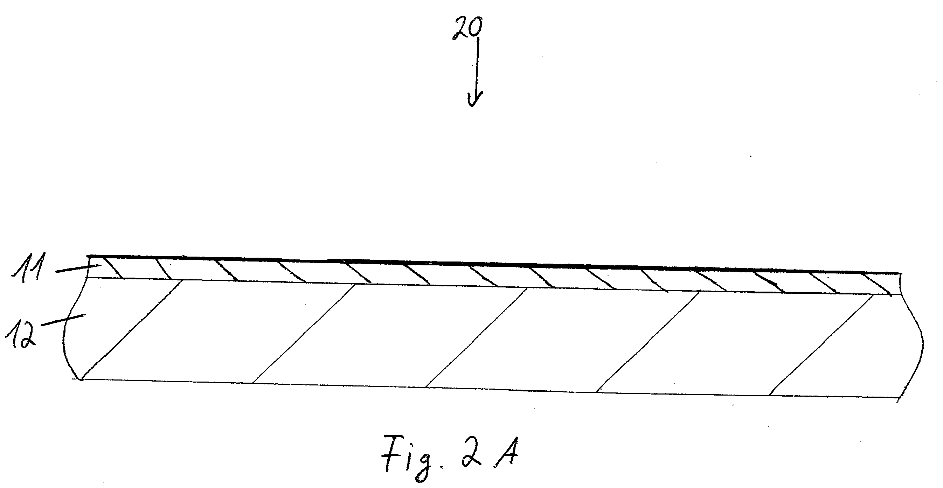

Die Figuren 2A bis 2D illustrieren Schritte eines beispielhaften Verfahrens. Figur 2A zeigt ein schematisch dargestelltes Leistenprofil 12, welches mit einer ersten Lackschicht 11 versehen ist. Die Lackschicht 11 ist auf einer Schichtfläche 20 des Leistenprofils vorgesehen. Das Bereitstellen eines solchen auf einer Sichtfläche mit einer ersten Lackschicht versehenen Leistenprofils stellt den ersten Schritt einer Ausführungsform eines derartigen Verfahrens dar.

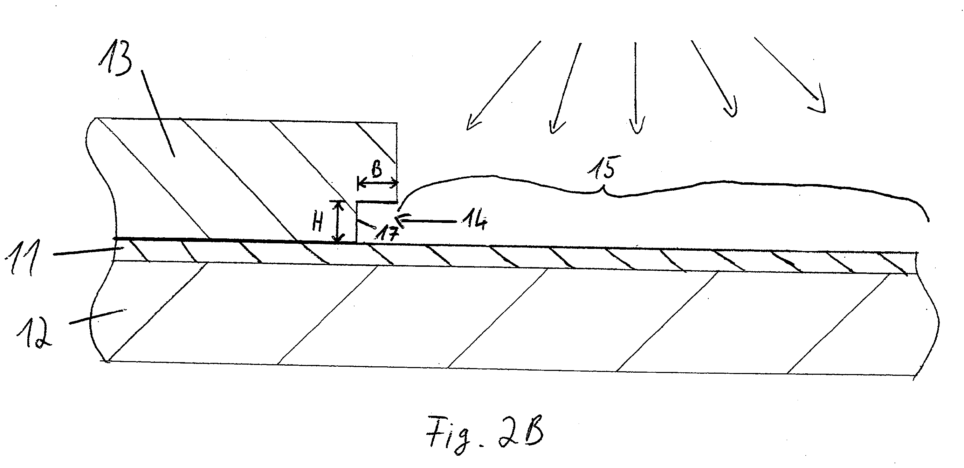

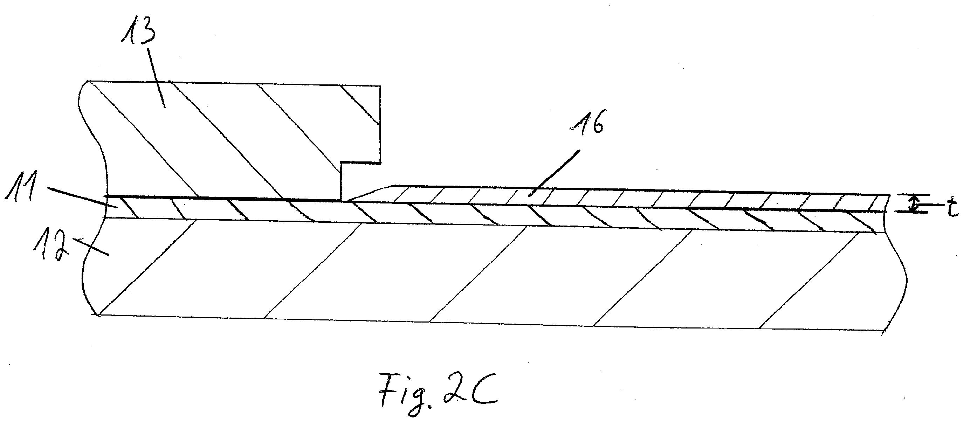

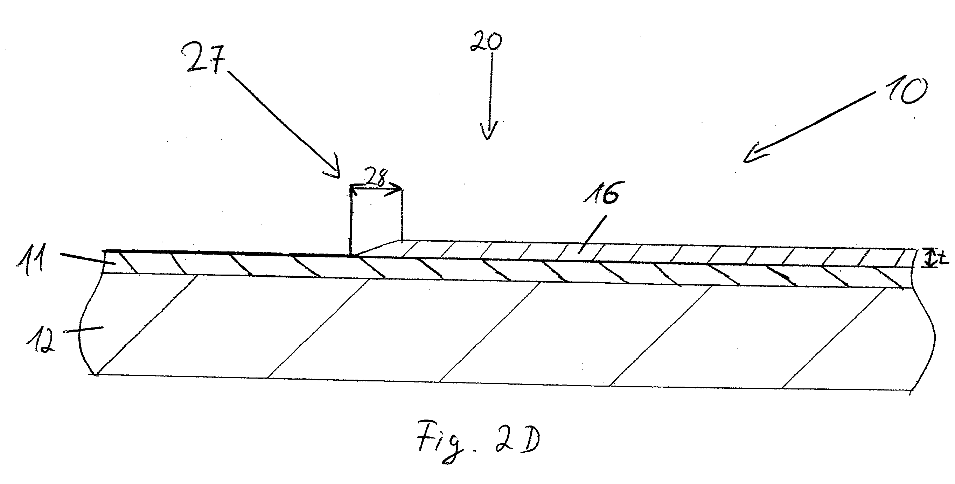

Figur 2B zeigt das Leistenprofil 12 mit der Lackschicht 11 aus Figur 2A, wobei auf dem Leistenprofil auf der Sichtfläche und somit auf der ersten Lackschicht eine Maskierschablone 13 vorgesehen ist. Die Maskierschablone 13 ist derart auf dem Leistenprofil vorgesehen, dass ein Abschnitt 15 der Sichtfläche des Leistenprofils freiliegt. Die Maskierschablone 13 weist eine Lackauslaufnut 14 auf. Die Lackauslaufnut 14 ist mit einer Höhe H und einer Breite B gebildet. Ferner weist die Lackauslaufnut 14 einen Nutgrund 17 auf. Die Lackauslaufnut 14 ist an der Grenze zu dem freiliegenden Abschnitt 15 vorgesehen und bildet an der Maskierschablone 13 eine nach innen versetzte Stufe aus. Die hintere Wand dieser Stufe, welche von dem freiliegenden Abschnitt 15 abgewandt ist, stellt den Nutgrund 17 dar. Das Positionieren der Maskierschablone auf dem Leistenprofil stellt einen zweiten Schritt der vorliegenden Ausführungsform dieses Verfahrens dar. Der dritte Schritt besteht nun im Lackieren des Leistenprofils im Bereich der vorgegebenen Abschnitte. Dies ist mit den Pfeilen in Figur 2C symbolisiert. Bei diesem Lackierschritt wird eine zweite Lackschicht 16 erzeugt, die ebenfalls in Figur 2C dargestellt ist. Die zweite Lackschicht 16 weist eine Dicke t auf und ist auf der ersten Lackschicht 11 aufgebracht. Der nächste Schritt dieses Verfahrens besteht im Abnehmen der Maskierschablone 13 von dem Leistenprofil 12. Figur 2D zeigt das Leistenprofil 12 nachdem die Maskierschablone abgenommen wurde mit der auf dem Leistenprofil 12 aufgebrachten ersten Lackschicht 11 und der abschnittsweise darauf aufgebrachten zweiten Lackschicht 16. Die beiden Lackschichten 11 und 16 sind an der Sichtfläche 20 des Leistenprofils vorgesehen. Die zweite Lackschicht 16 weist einen Übergangsbereich 27 mit einer vorbestimmten Breite 28 auf. Innerhalb dieses Übergangsbereiches, an welchem sich zuvor die Lackauslaufnut 14 befand, läuft die zweite Lackschicht 16 mit stetig geringer werdender Dicke t aus. Der Übergangsbereich ist frei von Stufen und Nuten. Somit zeigt Figur 2D schematisch auch eine zumindest zweifarbig lackierte, stufen- und nutfreien Karosserieleiste.

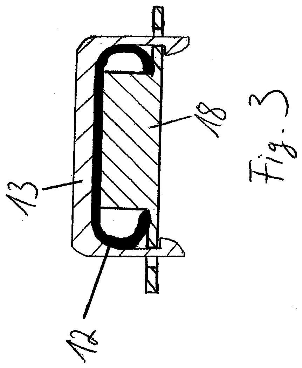

In Figur 3 ist eine Querschnittsansicht einer mittels einer Gegenschnalle 18 an einem Leistenprofil 12 rutschfest angebrachten Maskierschablone 13 dargestellt. Dazu sind an der Maskierschablone 13 Rasthaken 30 vorgesehen, mit welchem die Maskierschablone 13 mit der Gegenschnalle 18 verrastbar ist. Die Gegenschnalle 18 weist dazu Öffnungen 29 auf, in welche die Rasthaken 30 einführbar und verrastbar sind. Mittels der Rasthaken 30 kann eine gewisse Vorspannkraft auf die Maskierschablone 13 ausgeübt werden, insbesondere falls diese aus einem elastischen Material besteht. Alternativ könnte die Vorspannkraft auch dadurch aufgebracht werden, dass das Leistenprofil 12 eine gewisse Elastizität aufweist, und an der Stelle, an welcher die Maskierschablone 13 mit der Gegenschnalle 18 verrastet ist, leicht komprimiert wird. Ferner kann die Gegenschnalle 18 passgenau für die Kontur des Leistenprofils 12, insbesondere für Hinterschneidungen dessen, ausgebildet sein. In Figur 3 ist dies der besseren Übersichtlichkeit halber lediglich schematisch dargestellt.

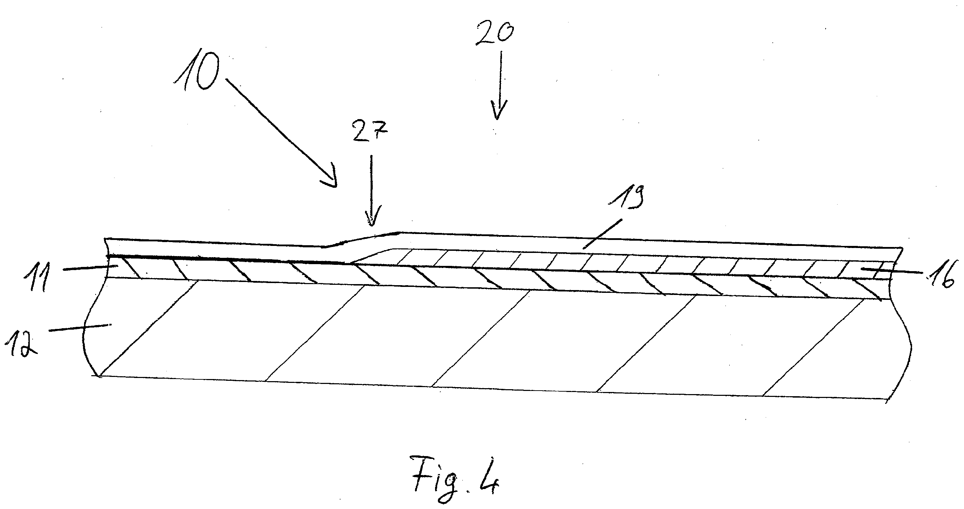

Figur 4 zeigt ein Ausführungsbeispiel einer mit einem erfindungsgemäßen Verfahren hergestellten, zumindest zweifarbigen Karosserieleiste, wobei die Karosserieleiste 10 auf ihrer Sichtseite 20 eine großflächig aufgetragene erste Lackschicht 11 und eine abschnittsweise aufgetragene zweite Lackschicht 16 aufweist, welche abschnittsweise auf der ersten Lackschicht 11 aufgetragen ist. Die zweite Lackschicht 16 weist analog zum Ausführungsbeispiel aus Figur 2D einen Übergangsbereich 27 auf. Über die gesamte Sichtseite der Karosserieleiste 10 ist auf der ersten und zweiten Lackschicht 11, 16 eine großflächig aufgetragene Schutzlackschicht 19 vorgesehen. Diese Schutzlackschicht 19 ist transparent als Klarlackschicht vorgesehen. Die Schutzlackschicht 19 wird flüssig aufgetragen und weist im flüssigen Zustand eine gewisse Oberflächenspannung auf, welche dazu führt, dass etwaige Unebenheiten des Untergrundes, auf welchem sie aufgetragen wird, durch die Schutzlackschicht 19 geglättet werden. Somit wird der Übergangsbereich 27 durch die Klarlackschicht zusätzlich geglättet. Obwohl schon ohne Schutzlackschicht 19 keine Stufe und/oder Nut an dem Übergangsbereich vorhanden war, sind die Übergänge zwischen der ersten und zweiten Schicht mit einer Schutzlackschicht noch sanfter als ohne diese Schutzlackschicht 19. Das Aufbringen einer Schutzlackschicht 19 kann insbesondere auch einen Verfahrensschritt einer Ausführungsform des erfindungsgemäßen Verfahrens darstellen.

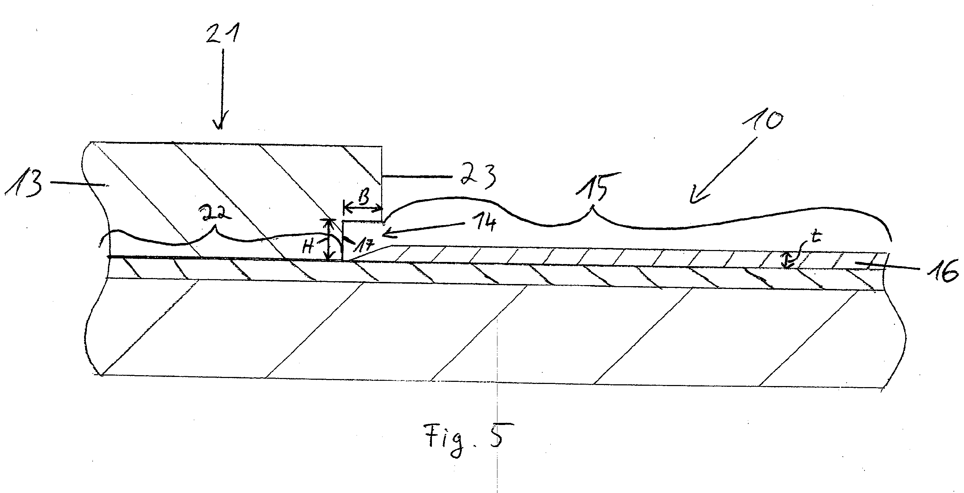

Figur 5 zweigt im Wesentlichen die Anordnung aus Figur 2C, allerdings wird in Figur 5 speziell auf die Merkmale der Maskierschablone 13 eingegangen. Die Maskierschablone 13 weist einen Grundkörper 21 und eine Lackauslaufnut 14 auf. Die Maskierschablone 13 ist auf einer mit einer ersten Lackschicht 11 und einer zweiten Lackschicht 16 versehenen Karosserieleiste 10 dargestellt. Der Grundkörper 21 der Maskierschablone 13 weist eine Abschlusskante 23 auf, welche zu einem nicht abgedeckten Abschnitt 15 der Karosserieleiste 10 orientiert ist. Die Maskierschablone 13 deckt einen abgedeckten Abschnitt 22 der Karosserieleiste 10 ab. In der dargestellten Anordnung wurde bereits eine zweite Lackschicht 16 auf die erste Lackschicht 11 aufgebracht, welche im Bereich der Lackauslaufnut 14 ausläuft. Dargestellt ist somit eine Anordnung gemäß der Figur 2C, in welcher die Maskierschablone 13 bereits wieder von der Karosserieleiste abgenommen werden kann, um das Verfahren zu vervollständigen. Im Bereich der Lackauslaufnut, in welcher die zweite Lackschicht 16 ausläuft, weist die Maskierschablone 13 eine Ausbildung auf, bei der die Lackauslaufnut 14 mit der Abschlusskante 23 eine in Richtung des abgedeckten Abschnittes 22 orientierte Stufe ausbildet. Diese Stufe ist in Richtung des freiliegenden Abschnitts 15 offen ausgebildet. Beim Aufbringen der Lackschicht 16 gelangt so eine reduzierte Menge an Lack in die Lackauslaufnut 14, und zwar mit zunehmender Breite B der Lackauslaufnut in einer stetig abnehmenden Menge. Daraus resultierend läuft die zweite Lackschicht 16 in der Lackauslaufnut 14 mit stetig geringer werdender Dicke t aus. Die Lackauslaufnut 14 weist dazu eine Breite B auf, die groß genug ist, damit der in die Lackauslaufnut 14 an der offenen Seite eindringende Lack nicht den Nutgrund 17 der Lackauslaufnut 14 erreicht. Somit wird gewährleistet, dass die zweite Lackschicht 16 ohne eine Kante ausläuft. Ferner weist die Lackauslaufnut 14 eine bestimmte Höhe H auf, welche größer ist als die Dicke t der zweiten Lackschicht 16. Somit wird gewährleistet, dass der Übergang 27 der zweiten Lackschicht 16 harmonisch verläuft und nicht an der Maskierschablone 13 bzw. der Lackauslaufnut 14 oder der Abschlusskante 23 anstößt. Die in Figur 5 dargestellte Maskierschablone 13 stellt eine beispielhafte Realisierung dar.

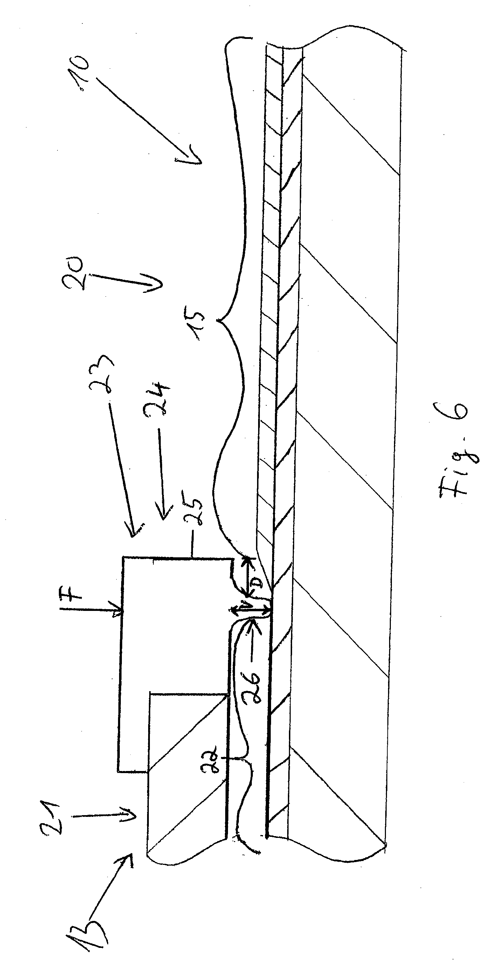

In Figur 6 ist eine Ausführungsform einer erfindungsgemäßen Maskierschablone 13 dargestellt, wobei diese zusätzliche Funktionen aufweist. Die Maskierschablone 13 weist in Figur 6 einen Grundkörper 21 auf, welcher an der Abschlusskante 23 mit einer Dichteinrichtung 24 versehen ist. Die Dichteinrichtung 24 ist mit dem Grundkörper 21 verbunden, und weist eine Dichtlippe 26 auf, welche zu der Sichtfläche 20 der Karosserieleiste 10 orientiert ist und mit einem Vorstand V zu der Sichtfläche 20 nach unten hin vorsteht. Somit liegen der Grundkörper 21 und die Dichteinrichtung 24 nicht flächig auf der Karosserieleiste auf, sondern lediglich entlang einer Linie, welche durch die Dichtlippe 26 definiert ist. Die Dichtlippe 26 ist um einen vorbestimmten Abstand D von einem Maskierungsrand 25 der Dichteinrichtung 24 beabstandet angeordnet. Die Dichtlippe ist um diesen Abstand D in Richtung des abgedeckten Abschnitts 22 von dem Maskierungsrand 25 versetzt. Die Dichtlippe 26 kann dabei parallel zu dem Maskierungsrand 25 verlaufen, so dass über die gesamte Breite der Maskierschablone der gleiche vorbestimmte Abstand D eingehalten wird. Die Dichtlippe 26 bzw. die gesamte Dichteinrichtung 24 enthält ein elastisches Material, wodurch sich die Dichtlippe 26 bzw. die Dichteinrichtung 24 an kleinere Unebenheiten der Karosserieleiste 10 anpassen kann. Die in Figur 6 dargestellte Ausführungsform einer Maskierschablone 13 kann insbesondere mit Fixiermitteln bzw. einer Gegenschnalle 18 gemäß dem in Figur 3 dargestellten Ausführungsbeispiel an der Karosserieleiste 12 angebracht sein, so dass mit Hilfe der Rastmittel 29, 30 eine gewisse Vorspannkraft auf die Dichteinrichtung 24 aufbringbar ist. Die Vorspannkraft wirkt dabei in Richtung des Kraftpfeils F, und drückt die Dichtlippe 26 gleichmäßig auf die Sichtfläche 20 der Karosserieleiste 10, sodass diese zuverlässig den abgedeckten Abschnitt 22 beim Lackieren der Lackschicht 16 abdichtet.

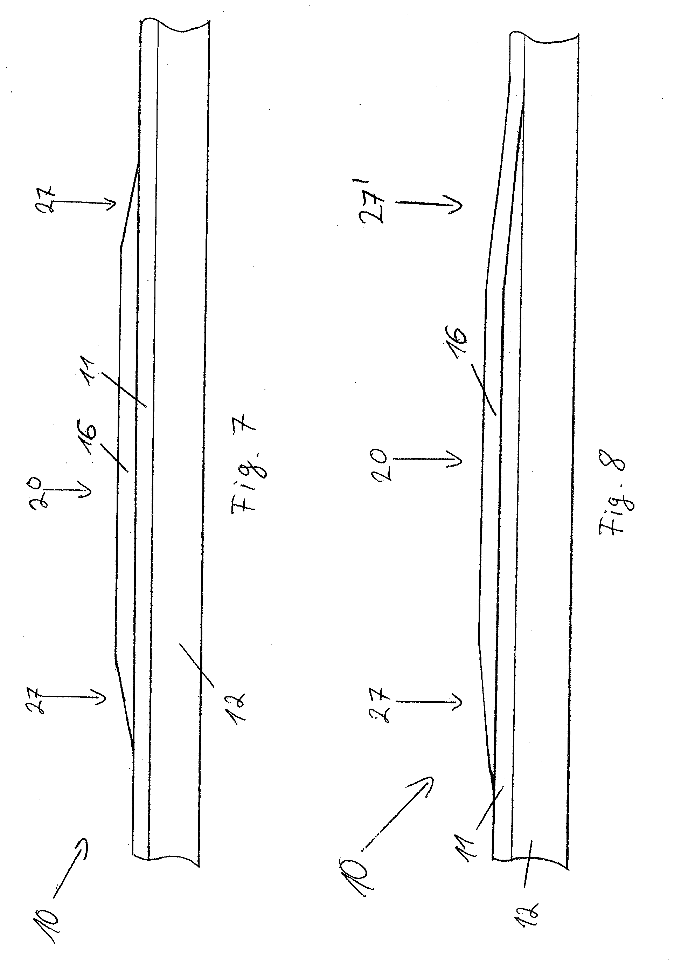

Figur 7 zeigt ein Ausführungsbeispiel einer mit einem erfindungsgemäßen Verfahren hergestellten Karosserieleiste 10, wobei die Karosserieleiste 10 ein schematisch dargestelltes Leistenprofil 12 umfasst, auf welchem großflächig eine erste Lackschicht 11 aufgebracht ist. Auf der ersten Lackschicht 11 ist eine zweite Lackschicht 16 abschnittsweise aufgebracht, wobei zwei Übergangsbereiche 27 vorgesehen sind, die den Abschnitt, welcher mit der zweiten Lackschicht 16 versehen ist, begrenzen. Hierbei handelt es sich beispielsweise um den Abschnitt einer Dachleiste, welcher im Bereich eines andersfarbigen Dachs vorgesehen ist. Die anderen beiden Abschnitte der Karosserieleiste 10, an welchen lediglich die erste Lackschicht 11 vorliegt, entsprechen beispielsweise den Abschnitten, auf welchen sich die Dachzierleiste 10 auf die A- bzw. C-Säule des Fahrzeugs erstreckt. Somit weist die Sichtseite 20 der Karosserieleiste 10 zwei Farbwechsel auf, wobei zunächst von der Farbe der ersten Lackschicht 11 auf die Farbe der zweiten Lackschicht 16 und anschließend von der Farbe der zweiten Lackschicht 16 wieder auf die Farbe der ersten Lackschicht 11 gewechselt wird. Die Übergangsbereiche 27 sind dabei erfindungsgemäß stufen- und nutfrei. Insbesondere ist die zweite Lackschicht 16 mit einem erfindungsgemäßen Verfahren unter Verwendung einer erfindungsgemäßen Maskierschablone aufgebracht.

In Figur 8 ist ein weiteres Ausführungsbeispiel einer mit einem erfindungsgemäßen Verfahren hergestellten Karosserieleiste 10 dargestellt, wobei auf einem Leistenprofil 12 eine erste Lackschicht 11 aufgetragen ist und abschnittsweise eine zweite Lackschicht 16 auf der ersten Lackschicht 11 aufgetragen ist. Am Übergangsbereich 27 von der ersten Lackschicht 11 zur zweiten Lackschicht 16 läuft die zweite Lackschicht 16 mit kontinuierlich geringer werdender Dicke t aus. In diesem Ausführungsbeispiel findet kein zweiter Farbwechsel statt, sodass es nicht notwendig ist, das gesamte Leistenprofil 12 mit der ersten Lackschicht 11 zu versehen. Deshalb läuft die erste Lackschicht 11 nach dem Übergangsbereich 27 unterhalb der zweiten Lackschicht 16 aus. Dafür ist ein zweiter Übergangsbereich 27' vorgesehen, in welchem die erste Lackschicht mit stetig geringer werdender Dicke unterhalb der zweiten Lackschicht 16 ausläuft. Zum Vorsehen des Auslaufbereichs 27' der ersten Lackschicht kann entweder eine erfindungsgemäße Maskierschablone verwendet werden, und wie bei dem erfindungsgemäßen Verfahren, abgesehen von dem Vorsehen einer ersten Lackschicht, vorgegangen werden oder es kann alternativ einfach ein Sprüh- oder Spritzlackierverfahren verwendet werden, bei welchem der Lack am Rand eines lackierten Bereiches verfahrensbedingt kontinuierlich ausläuft. Dies ist möglich, weil die optische Erscheinung dieses Übergangsbereich aufgrund dessen, dass er mit der zweiten Lackschicht überlackiert wird, nicht sehr bedeutsam ist. Die Sichtseite 20 der Karosserieleiste des vorliegenden Ausführungsbeispiels ist somit zweifarbig ausgebildet, wobei ein Farbwechsel im Bereich des Übergangsbereichs 27 stattfindet.

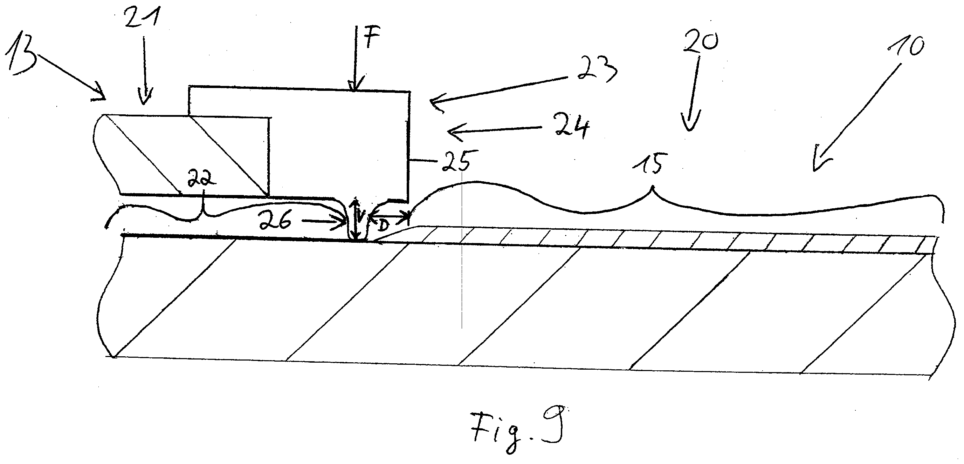

Die Figuren 9-12 zeigen weitere Ausführungsbeispiele einer mit einem erfindungsgemäßen Verfahren hergestellten Karosserieleiste 10, wobei diese Ausführungsbeispiele im Wesentlichen den in den Figuren 2D, 4, 6 und 7 entsprechen. Der Unterschied zu diesen vorhergehenden Ausführungsbeispielen ist, dass keine erste Lackschicht 11 vorgesehen ist, sondern dass die Lackschicht 16 direkt auf das Leistenprofil 12 aufgebracht wird. Das Leistenprofil 12 enthält oder besteht bevorzugt aus einem Kunststoffmaterial mit einem schwarzen Farbton als Grundton.

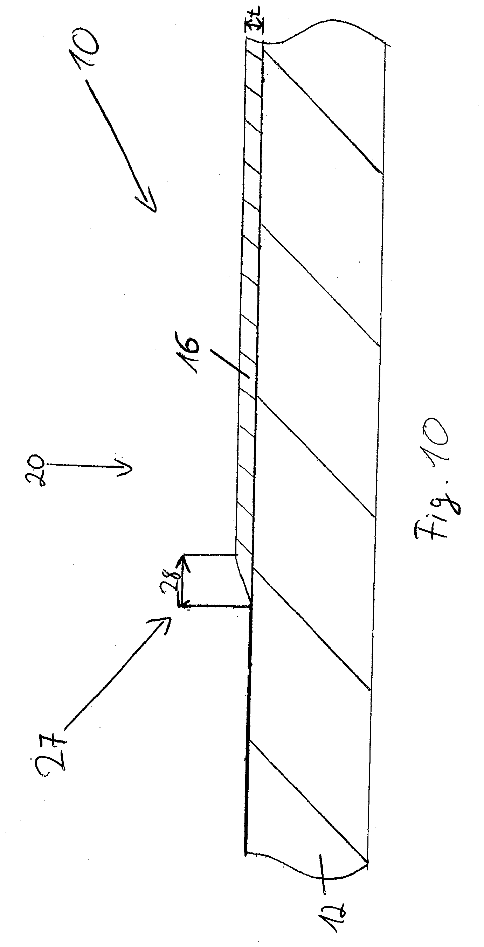

Fig. 9 zeigt eine zweifarbig lackierte Karosserieleiste, an der das erfindungsgemäße Lackierverfahren analog zu den vorhergehenden Ausführungsbeispielen mit einer erfindungsgemäßen Maskierschablone 13, jedoch ohne eine erste Lackschicht 11 sondern direkt auf dem Material des Leistenprofils 12 erfolgt. Als Resultat erhält man nach dem abnehmen der Maskierschablone 13 die in Fig. 10 dargestellte abschnittsweise lackierte Karosserieleiste 10 mit einem Übergangsbereich 27 zwischen der Oberfläche des Leistenprofils und der Lackschicht.

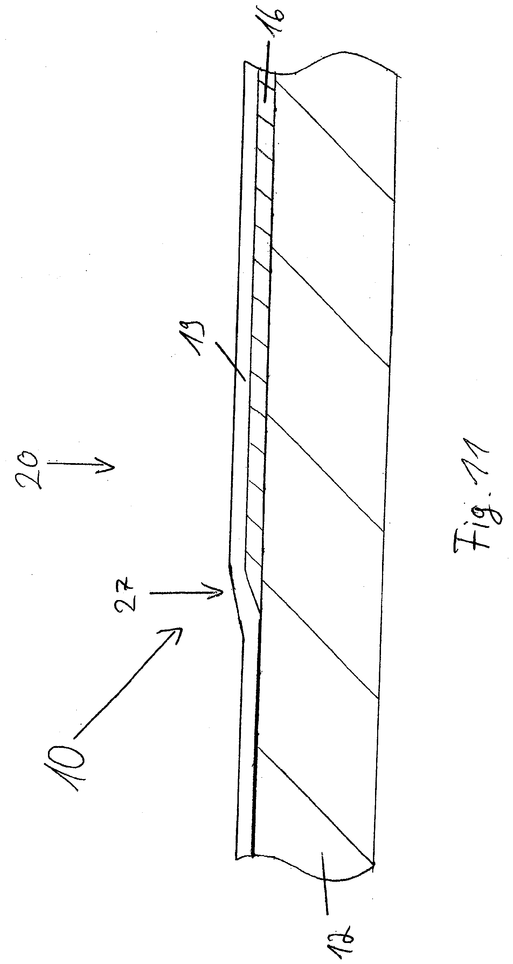

Fig. 11 zeigt die abschnittsweise lackierte Karosserieleiste 10 aus Fig. 10 mit einer transparenten Schutzlackschicht 19, welche sich über die gesamte Sichtseite 20 erstreckt. Die Schutzlackschicht erzeugt an dem Abschnitt ohne Lackschicht 16 eine wegen des Grundtons des Materials des Leistenprofils 12 schwarze Oberfläche, welche durch den Schutzlack 19 eine hochwertige Anmutung erhält und dadurch so aussieht, als wäre sie schwarz lackiert worden. Im Bereich der Lackschicht 16 ist die Karosserieleiste 10 in der Wagenfarbe eines Kraftfahrzeugs, für welches sie bestimmt ist, lackiert und ebenfalls mit der Schutzlackschicht 19 überzogen. Somit erhält man gemäß einer Ausführungsform der vorliegenden Erfindung eine zweifarbig lackierte Karosserieleiste, obwohl nur eine farbige Lackschicht eingesetzt wird. Der Übergangsbereich 27 verläuft aufgrund der Schutzlackschicht 19 sanfter und harmonischer als ohne eine Schutzlackschicht.

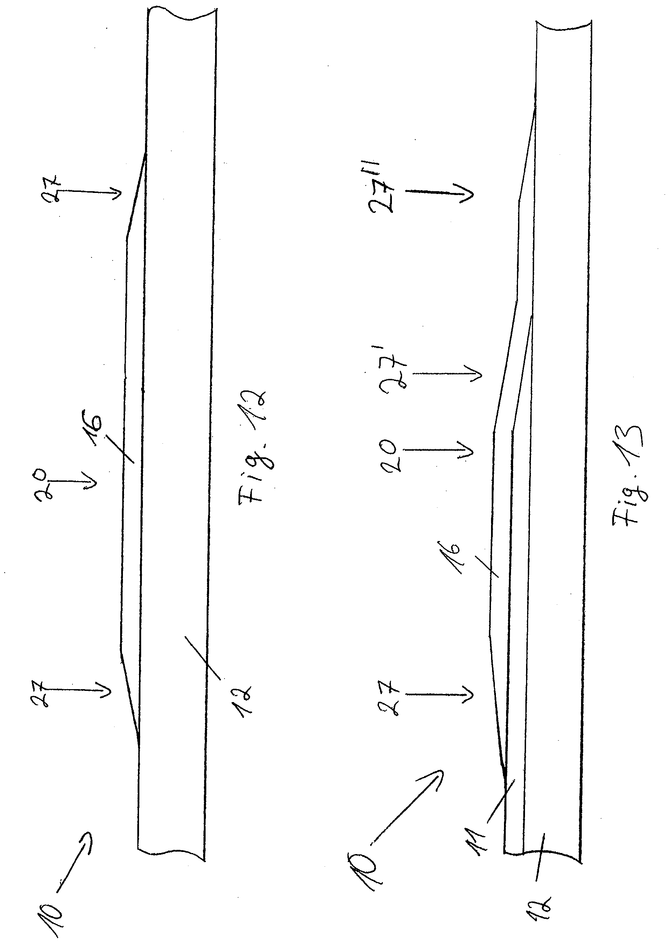

In Fig. 12 ist ein Ausführungsbeispiel einer Karosserieleiste mit einer direkt darauf aufgetragenen Lackschicht 16, die an zwei Übergangsbereichen 27 ausläuft, dargestellt. Diese Karosserieleiste 10 weist ebenfalls keine erste Lackschicht auf und ist ansonsten im Wesentlichen wie die Karosserieleiste aus Fig. 7 ausgebildet.

In Fig. 13 ist eine Längsschnittansicht einer Karosserieleiste 10 mit drei Übergangsbereichen 27, 27' und 27" dargestellt. An der am linken Zeichnungsrand darstellten Oberfläche der Sichtseite 20 liegt eine erste Lackschicht 11 vor. Darauf ist eine zweite Lackschicht 16 aufgetragen, welche an einem Übergangsbereich 27 auf der ersten Lackschicht 11 stetig ausläuft. Im weiteren Verlauf in der Mitte des dargestellten Zeichnungsbereichs läuft unterhalb der zweiten Lackschicht 16 in einem zweiten Übergangsbereich 27' die erste Lackschicht 11 stetig aus. Zwischen den Übergangsbereichen 27' und 27" liegt folglich nur die zweite Lackschicht 16 auf der Sichtseite 20 vor, wobei die zweite Lackschicht 16 im Übergangsbereich 27" auf dem Leistenprofil 12 ebenfalls ausläuft. Am rechten Rand des Zeichnungsbereichs der Sichtseite 20 liegt die Materialoberfläche des Leistenprofils 12 vor, welche bevorzugt einen schwarzen Grundton aufweist. Somit ist eine dreifarbige Karosserieleiste 10 geschaffen, welche die Farbe der ersten und zweiten Lackschichten 11, 16, sowie den Grundton des Leistenprofils 12 aufweist. Selbstverständlich sind die Reihenfolge und unterschiedlichen Möglichkeiten der Schichtung der einzelnen Schichten sowie die Anzahl der Schichten für einen Fachmann leicht änderbar, ohne von der vorliegenden Erfindung abzuweichen.

Jedes der dargestellten Ausführungsbeispiele einer Karosserieleiste kann selbstverständlich mit einer Schutzlackschicht überzogen sein. Die Ausführungsbeispiele in Figur 4 und 11 illustrieren dies stellvertretend für die anderen Ausführungsbeispiele.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Obwohl die beschriebenen Ausführungsbeispiele auf lediglich zweifarbig bzw. dreifarbig lackierte Karosserieleisten gerichtet sind, kann sowohl das erfindungsgemäße Verfahren als auch die erfindungsgemäße Maskierschablone dazu verwendet werden, eine ebenfalls von der Offenbarung der vorliegenden Anmeldung erfasste mehrfarbige Karosserieleiste zu realisieren. Dazu ist zumindest ein weiterer lackierter Abschnitt vorgesehen, der eine Oberfläche mit zumindest einer weiteren Lackschicht aufweist, wobei zumindest ein weiterer Übergangsbereich zwischen der ersten oder zweiten Lackschicht oder der Materialoberfläche des Leistenprofils und der weiteren Lackschicht vorgesehen ist. Dieser Übergangsbereich kann auf die erfindungsgemäße Weise stufenfrei und nutfrei realisiert sein. Ferner ist jedes der oben beschriebenen Ausführungsbeispiele dahingehend modifizierbar, dass eine überdeckte Lackschicht, auf welcher eine andere Lackschicht vorgesehen ist, unter dieser ausläuft.

Als Grundton eines Leistenprofils können alternativ zu einem schwarzen Grundton auch alle möglichen anderen Farbtöne als Grundtöne vorgesehen sein. Beispielsweise kann auch ein im Wesentlichen weißer Grundton, ein farbiger Grundton oder ein transparentes Leistenprofil vorgesehen sein. Als schwarzer Grundton sind alle im Wesentlichen schwarzen Farbtöne, also auch dunkle Grau- oder Farbstufen, zu verstehen.

Ferner kann eine Klarlackschicht bzw. eine Schutzlackschicht auf jeder der dem erfindungsgemäßen Verfahren hergestellten Karosserieleiste bzw. bei dem erfindungsgemäßen Verfahren derart vorgesehen sein, dass sie eine Dickenveränderung an den Übergängen global über dem Verlauf der Karosserieleiste ausgleicht. Dazu kann die Klarlackschicht in Bereichen, in welchen durch die Übergänge zwischen den ersten und/oder zweiten und/oder mehreren Lackschichten variierenden Dicken des Lackauftrags vorliegen, diese ausgleichen, indem an dünneren Lackauftragsstellen derart und/oder länger lackiert wird und somit eine dickere Klarlackschicht aufgetragen wird, als an Stellen, an welchen der Lackauftrag der ersten und/oder zweiten und/oder weiteren Lackschicht insgesamt dicker ist.

Die erste Lackschicht kann mit einem beliebigen Verfahren auf das Leistenprofil aufgebracht sein, beispielsweise mit einem Spritz- bzw. Sprühlackierverfahren. Alternativ kann dazu beispielsweise auch ein Pulverbeschichtungsverfahren oder ein bereits beim Herstellen des Leistenprofils durchgeführtes Coextrusionsverfahren eingesetzt werden.

Die einzelnen Lackschichten können für das Verfahren und/oder für die Karosserieleiste jeweils aus mehreren Einzelschichten bestehen, beispielsweise wenn Grundierungen und/oder Primer eingesetzt werden. Am Übergangsbereich können diese analog zu den farbigen Lackschichten auslaufen.

Optional oder zusätzlich zu Lacken mit unterschiedlichen Lackfarben können für die Lackschichten auch Lacke mit unterschiedlichen Eigenschaften oder Effekten sowie unterschiedliche Lackarten verwendet bzw. vorgesehen werden/sein. Folglich umfassen die Begriffe "zweifarbig" bzw. "mehrfarbig" auch unterschiedliche Eigenschaften, Effekte und/oder Lackarten.

Alternativ zu den Fixiermitteln kann die Maskierschablone beispielsweise auch adhäsiv auf der Oberfläche der ersten Lackschicht fixiert werden.

Auch können die Abfolge der Schritte variiert werden oder es können Zwischenschritte, z.B. Reinigungsschritte, in dem Herstellungsprozess eingefügt werden, sofern dadurch der beanspruchte Herstellungsprozess nicht verändert wird.

### Bezugszeichenliste

- 1: Leistenprofil
- 2: Lackschicht einer ersten Farbe
- 3: Maskierung
- 4, 4': Lackschicht einer zweiten Farbe
- 5: Lackstufe
- 10: Karosserieleiste
- 11: erste Lackschicht
- 12: Leistenprofil
- 13: Maskierschablone
- 14: Lackauslaufnut
- 15: vorgegebener Abschnitt
- 16: zweite Lackschicht
- 17: Nutgrund
- 18: Fixiermittel, Gegenschnalle
- 19: Schutzlack
- 20: Sichtfläche
- 21: Grundkörper
- 22: abgedeckter Abschnitt
- 23: Abschlusskante
- 24: Dichteinrichtung
- 25: Maskierungsrand
- 26: Dichtlippe
- 27, 27', 27": Übergangsbereich
- 28: vorbestimmte Breite
- 29: Öffnungen
- 30: Rasthaken

- B: Breite der Lackauslaufnut
- F: Kraftrichtung der Vorspannkraft
- H: Höhe der Lackauslaufnut
- t: Dicke der zweiten Lackschicht

## Patentansprüche

1. Verfahren zum Lackieren einer zumindest zweifarbigen, stufenfreien und nutfreien Karosserieleiste (10), insbesondere einer Dachzierleiste, mit den Schritten:
- Bereitstellen eines Leistenprofils (12) mit einer Sichtfläche (20);
- Positionieren einer mit einer Lackauslaufnut (14) versehenen Maskierschablone (13) auf der Sichtfläche (20) des Leistenprofils (12) derart, dass zumindest vorgegebene Abschnitte (15) der Sichtfläche (20) frei liegen und die Lackauslaufnut (14) an der Grenze zu den vorgegebenen Abschnitten (15) angeordnet ist, wobei die Lackauslaufnut (14) entlang einer Abschlusskante (23) eines Grundkörpers (21) der Maskierschablone (13) verläuft und mit einer an der Abschlusskante vorgesehenen Dichteinrichtung (24) gebildet ist, welche einen zu einem vorgegebenen Abschnitt (15) der zu lackierenden Karosserieleiste (10) gewandten Maskierungsrand (25) und eine Dichtlippe (26) aufweist, wobei die Dichtlippe derart ausgebildet und angeordnet ist, dass sie zur Sichtfläche (20) der zu lackierenden Karosserieleiste (10) derart vorsteht, dass sie beim Positionieren der Maskierschablone auf der Sichtfläche (20) aufliegt und so einen von der Maskierschablone (13) abgedeckten Abschnitt (22) der Sichtfläche (20) von dem vorgegebenen Abschnitt (15) abtrennt;
- Lackieren des Leistenprofils (12) im Bereich der vorgegebenen Abschnitte zum Erzeugen einer Lackschicht (16) ;
- Abnehmen der Maskierschablone (13) von dem Leistenprofil (12).

2. Verfahren nach Anspruch 1,
**dadurch gekennzeichnet,**
**dass** das Lackieren derart und/oder solange erfolgt, dass die Lackschicht (16) im Bereich der vorgegebenen Abschnitte (15) mit einer vorbestimmten Dicke (t) erzeugt wird, wobei die vorbestimmte Dicke (t) im Bereich der Lackauslaufnut (14) stetig geringer werdend ausläuft und/oder dass die auslaufende Lackschicht (16) im Bereich der Lackauslaufnut (14) bevor einem Nutgrund (17) der Lackauslaufnut (14) endet.

3. Verfahren nach Anspruch 2,
**dadurch gekennzeichnet,**
**dass** die vorbestimmte Dicke (t) der Lackschicht (16) geringer ist als die Höhe (H) und/oder Breite (B) der Lackauslaufnut (14).

4. Verfahren nach einem der vorstehenden Ansprüche,
**dadurch gekennzeichnet,**
**dass** an nicht lackierten Abschnitten ein schwarzer Grundton des Leistenprofils an der Sichtfläche (20) vorliegt und/oder die Lackschicht (16) eine zweite Lackschicht (16) darstellt und unterhalb dieser zweiten Lackschicht (16) vor dem Lackieren der zweiten Lackschicht (16) großflächig eine erste Lackschicht (11) auf der Sichtfläche (20) vorgesehen wird.

5. Verfahren nach einem der vorstehenden Ansprüche,
**dadurch gekennzeichnet,**
**dass** das Lackieren mittels eines Sprüh- und/oder Spritzlackierverfahrens durchgeführt wird, derart, dass Lacknebel in die Lackauslaufnut (14) hineingelangt, aber nicht an einen Nutgrund (17) der Lackauslaufnut gelangt, wobei sich der in die Lackauslaufnut (14) vordringende Lacknebel innerhalb der Lackauslaufnut (14) zum Nutgrund (17) hin mit stetig abnehmender Schichtdicke (t) auf dem Leistenprofil (12) absetzt.

6. Maskierschablone (13) zum zumindest zweifarbigen, stufenfreien und nutfreien Lackieren einer Karosserieleiste (10), insbesondere einer Dachzierleiste,
mit einem Grundkörper (21), wobei der Grundkörper (21) derart vorgesehen und ausgebildet ist, dass er einen Abschnitt (22) der zu lackierenden Karosserieleiste (10) zumindest teilweise abdeckt,
mit einer an dem Grundkörper (21) vorgesehenen, entlang einer Abschlusskante (23) des Grundkörpers (21) verlaufenden Lackauslaufnut (14), welche derart angeordnet ist, dass sie eine zu der zu lackierenden Karosserieleiste (10) orientierte Stufe ausbildet, wobei die Lackauslaufnut (14) mit einer an der Abschlusskante (23) des Grundkörpers (21) vorgesehenen Dichteinrichtung (24) gebildet ist, wobei die Dichteinrichtung (24) einen zu einem nicht abgedeckten Abschnitt (15) der zu lackierenden Karosserieleiste (10) gewandten Maskierungsrand (25) und eine Dichtlippe (26) aufweist, wobei die Dichtlippe derart ausgebildet und angeordnet ist, dass sie zur Sichtfläche (20) der zu lackierenden Karosserieleiste (10) derart vorsteht, dass sie auf der Sichtfläche (20) aufliegt und den abgedeckten Abschnitt (22) von dem nicht abgedeckten Abschnitt (15) abtrennt.

7. Maskierschablone nach Anspruch 6,
**dadurch gekennzeichnet,**
**dass** die Abschlusskante (23), an der die Lackauslaufnut (14) vorgesehen ist, zu einem nicht abgedeckten Abschnitt (15) der zu lackierenden Karosserieleiste (10) orientiert ist und/oder die Lackauslaufnut (14) derart ausgelegt ist, dass ihre Höhe (H) größer ist als eine Dicke (t) einer unter Verwendung der Maskierschablone auf die Karosserieleiste (10) aufzubringende Lackschicht (16).

8. Maskierschablone nach einem der Ansprüche 6 oder 7,
**dadurch gekennzeichnet,**
**dass** die Dichtlippe (26) entlang des Maskierungsrandes (25) verläuft und zum abgedeckten Abschnitt (15) hin um einen vorbestimmten Abstand (D) von dem Maskierungsrand (25) versetzt angeordnet ist.

9. Maskierschablone nach Anspruch 8,
**dadurch gekennzeichnet,**
**dass** ein Vorstand (V) der Dichtlippe und/oder der vorbestimmte Abstand (D) zwischen 0,1 mm und 1,0 mm, insbesondere zwischen 0,25 mm und 0,75 mm und bevorzugt zwischen 0,4 mm und 0,6 mm betragen.

10. Maskierschablone nach einem der Ansprüche 8 oder 9,
**dadurch gekennzeichnet,**
**dass** Fixiermittel (18) vorgesehen sind, die zum gleichmäßigen Andrücken der Dichtlippe (26) auf der Sichtfläche (20) der zu lackierenden Karosserieleiste (10) ausgebildet sind.

## Claims

1. Method for painting an at least two-coloured, step-free and groove-free vehicle body strip (10), in particular a roof trim strip, comprising the steps of:
- providing a strip profile (12) having a visible face (20) ;
- positioning a masking stencil (13), provided with a paint drainage groove (14), on the visible face (20) of the strip profile (12) in such a way that at least predetermined portions (15) of the visible face (20) are exposed and the paint discharge groove (14) is arranged on the border with the predetermined portions (15), the paint discharge groove (14) extending along a terminating edge (23) of a base body (21) of the masking stencil (13) and being formed with a sealing means (24), which is provided on the terminating edge and which has a masking edge (25), facing towards a predetermined portion (15) of the vehicle body strip (10) to be painted, and a sealing lip (26), the sealing lip being formed and arranged so as to protrude with respect to the visible face (20) of the vehicle body strip (10) to be painted, so as to be placed on the visible face (20) when the masking stencil is positioned and thus to separate off a portion (22), covered by the masking stencil (13), of the visible face (20) from the predetermined portion (15);
- painting the strip profile (12) in the region of the predetermined portions to produce a paint layer (16);
- removing the masking stencil (13) from the strip profile (12) .

2. Method according to claim 1,
**characterised in that**
the painting takes place in such a way and/or for sufficiently long that the paint layer (16) is produced in the region of the predetermined portions (15) at a predetermined thickness (t), the predetermined thickness (t) discharging so as to become continuously smaller in the region of the paint discharge groove (14), and/or **in that** the discharging paint layer (16) in the region of the paint discharge groove (14) ends before a groove floor (17) of the paint discharge groove (14).

3. Method according to claim 2,
**characterised in that**
the predetermined thickness (t) of the paint layer (16) is smaller than the height (H) and/or width (B) of the paint discharge groove (14).

4. Method according to any of the preceding claims,
**characterised in that**
on unpainted portions a black basic tint of the strip profile is present at the visible face (20) and/or the paint layer (16) forms a second paint layer (16) and below this second paint layer (16), before the second paint layer (16) is painted, a first paint layer (11) is provided on the visible face (20) over a large area.

5. Method according to any of the preceding claims,
**characterised in that**
the painting is carried out by a sputtering and/or spraying method, in such a way that paint mist arrives in the paint discharge groove (14), but does not arrive at a groove floor (17) of the paint discharge groove, the paint mist which penetrates into the paint discharge groove (14) being deposited on the strip profile (12) at a continuously decreasing layer thickness (t) towards the groove floor (17) within the paint discharge groove (14).

6. Masking stencil (13) for at least two-coloured, step-free and groove-free painting of a vehicle body strip (10), in particular a roof trim strip,
comprising a base body (21), the base body (21) being provided and formed so as to cover a portion (22) of the vehicle body strip (10) to be painted at least in part, comprising a paint discharge groove (14), which is provided on the base body (21), extends along a terminating edge (23) of the base body (21), and is arranged so as to form a step, orientated to the vehicle body strip (10) to be painted, the paint discharge groove (14) being formed with a sealing means (24), which is provided on the terminating edge (23) of the base body (21), the sealing means (24) having a masking edge (25), facing towards a predetermined portion (15) of the vehicle body strip (10) to be painted, and a sealing lip (26), the sealing lip being formed and arranged so as to protrude with respect to the visible face (20) of the vehicle body strip (10) to be painted, so as to be placed on the visible face (20) and to separate off the covered portion (22) from the uncovered portion (15).

7. Masking stencil according to claim 6,
**characterised in that**
the terminating edge (23) on which the paint discharge groove (14) is provided is orientated to an uncovered portion (15) of the vehicle body strip (10) to be painted, and/or the paint discharge groove (14) is configured, in such a way that the height (H) thereof is greater than a thickness (t) of a paint layer (16) which is to be applied to the vehicle body strip (10) using the masking stencil.

8. Masking stencil according to either claim 6 or claim 7,
**characterised in that**
the sealing lip (26) extends along the masking edge (25) and is offset from the masking edge (25) towards the uncovered portion (15) by a predetermined distance (D).

9. Masking stencil according to claim 8,
**characterised in that**
a protrusion (V) of the sealing lip and/or the predetermined distance (D) are between 0.1 mm and 1.0 mm, in particular between 0.25 mm and 0.75 mm and preferably between 0.4 mm and 0.6 mm.

10. Masking stencil according to either claim 8 or claim 9,
**characterised in that**
fixing means (18) are provided, which are formed for uniformly pressing the sealing lip (26) onto the visible face (20) of the vehicle body strip (10) to be painted.

## Revendications

1. Procédé pour peindre une baguette de carrosserie (10), en particulier une baguette enjoliveuse de toit, au moins bicolore, avec transition continue et sans rainure comprenant les étapes consistant à :
- mettre à disposition un profilé de baguette (12) comprenant une surface visible (20) ;
- positionner un gabarit de marouflage (13) pourvu d'une rainure d'écoulement de peinture (14) sur la surface visible (20) du profilé de baguette (12) de telle manière qu'au moins des parties prédéfinies (15) de la surface visible (20) sont dégagées et que la rainure d'écoulement de peinture (14) est disposée à la limite des parties prédéfinies (15), la rainure d'écoulement de peinture (14) s'étendant le long d'un bord d'extrémité (23) d'un corps de base (21) du gabarit de marouflage (13) et étant formée avec un moyen d'étanchéité (24) prévu sur le bord d'extrémité, ledit moyen d'étanchéité présentant un bord de marouflage (25) orienté vers une partie prédéfinie (15) de la baguette de carrosserie (10) à peindre et une lèvre d'étanchéité (26), la lèvre d'étanchéité étant conçue et disposée pour dépasser par rapport à la surface visible (20) de la baguette de carrosserie (10) à peindre de telle manière qu'elle repose sur la surface visible (20) lors du positionnement du gabarit de marouflage et sépare ainsi une partie (22) de la surface visible (20) recouverte par le gabarit de marouflage (13) de la partie prédéfinie (15) ;
- peindre le profilé de baguette (12) dans la zone des parties prédéfinies pour générer une couche de peinture (16) ;
- retirer le gabarit de marouflage (13) du profilé de baguette (12).

2. Procédé selon la revendication 1, **caractérisé en ce que** la peinture est effectuée de telle manière et/ou jusqu'à ce que la couche de peinture (16) soit générée avec une épaisseur (t) prédéfinie dans la zone des parties prédéfinies (15), l'épaisseur (t) prédéfinie se terminant en devenant de plus en plus faible dans la zone de la rainure d'écoulement de peinture (14) et/ou que la couche de peinture (16) se terminant finisse dans la zone de la rainure d'écoulement de peinture (14) avant un fond de rainure (17) de la rainure d'écoulement de peinture (14).

3. Procédé selon la revendication 2, **caractérisé en ce que** l'épaisseur (t) prédéfinie de la couche de peinture (16) est inférieure à la hauteur (H) et/ou la largeur (B) de la rainure d'écoulement de peinture (14).

4. Procédé selon l'une des revendications précédentes, **caractérisé en ce**
**que** sur des parties non peintes, un ton dominant noir du profilé de baguette est présent sur la surface visible (20) et/ou la couche de peinture (16) représente une seconde couche de peinture (16) et sous cette seconde couche de peinture (16), une première couche de peinture (11) est prévue sur une grande surface sur la surface visible (20) avant la peinture de la seconde couche de peinture (16).

5. Procédé selon l'une des revendications précédentes, **caractérisé en ce**
**que** la peinture est exécutée au moyen d'un procédé de peinture par pulvérisation et/ou par application au pistolet, de telle sorte que le brouillard de peinture entre dans la rainure d'écoulement de peinture (14), mais ne parvient pas à un fond de rainure (17) de la rainure d'écoulement de peinture, le brouillard de peinture qui se répand dans la rainure d'écoulement de peinture (14) se déposant sur le profilé de baguette (12) dans la rainure d'écoulement de peinture (14) avec une épaisseur de couche (t) diminuant progressivement en direction du fond de rainure (17).

6. Gabarit de marouflage (13) pour la peinture au moins bicolore, avec transition continue et sans rainure d'une baguette de carrosserie (10), en particulier d'une baguette enjoliveuse de toit, comprenant :
un corps de base (21), le corps de base (21) étant prévu et conçu de telle manière qu'il recouvre au moins partiellement une partie (22) de la baguette de carrosserie (10) à peindre,
une rainure d'écoulement de peinture (14) prévue sur le corps de base (21) et s'étendant le long d'un bord d'extrémité (23) du corps de base (21), qui est disposée de telle manière qu'elle forme une marche orientée vers la baguette de carrosserie (10) à peindre, la rainure d'écoulement de peinture (14) étant formée avec un moyen d'étanchéité (24) prévu sur le bord terminal (23) du corps de base (21), le moyen d'étanchéité (24) présentant un bord de marouflage (25) orienté vers une partie (15) non recouverte de la baguette de carrosserie (10) à peindre et une lèvre d'étanchéité (26), la lèvre d'étanchéité étant conçue et disposée de façon à dépasser par rapport à la surface visible (20) de la baguette de carrosserie (10) à peindre de telle manière qu'elle repose sur la surface visible (20) et sépare la partie (22) recouverte de la partie (15) non recouverte.

7. Gabarit de marouflage selon la revendication 6, **caractérisé en ce**
**que** le bord d'extrémité (23), sur lequel la rainure d'écoulement de peinture (14) est prévue, est orienté vers une partie (15) non recouverte de la baguette de carrosserie (10) à peindre et/ou la rainure d'écoulement de peinture (14) est conçue de telle manière que sa hauteur (H) est supérieure à une épaisseur (t) d'une couche de peinture (16) à appliquer sur la baguette de carrosserie (10) en utilisant le gabarit de marouflage.

8. Gabarit de marouflage selon l'une des revendications 6 et 7, **caractérisé en ce**
**que** la lèvre d'étanchéité (26) s'étend le long du bord de marouflage (25) et est disposée décalée d'une distance prédéfinie (D) par rapport au bord de marouflage (25) en direction de la partie (15) recouverte.

9. Gabarit de marouflage selon la revendication 8, **caractérisé en ce**
**qu'**un dépassement (V) de la lèvre d'étanchéité et/ou la distance prédéfinie (D) sont compris entre 0,1 mm et 1,0 mm, en particulier entre 0,25 mm et 0,75 mm et de préférence entre 0,4 mm et 0,6 mm.

10. Gabarit de marouflage selon l'une des revendications 8 et 9, **caractérisé en ce**
**que** des moyens de fixation (18) sont prévus, qui sont conçus pour l'appui homogène de la lèvre d'étanchéité (26) sur la surface visible (20) de la baguette de carrosserie (10) à peindre.
